# EUROPEAN PATENT SPECIFICATION

(11) **EP 2 924 792 B1**
(45) Date of publication and mention of the grant of the patent: **16.01.2019**
(21) Application number: 13856093.3
(22) Date of filing: 06.11.2013
(51) Int. Cl.: H01M 8/241, H01M 8/0254, H01M 8/0273, H01M 8/2483, H01M 8/0267

(54) **FUEL CELL STACK**
BRENNSTOFFZELLENSTAPEL
EMPILEMENT DE PILES À COMBUSTIBLE

(30) Priority: 22.11.2012 JP 2012255838
(43) Date of publication of application: 30.09.2015
(73) Proprietor: NISSAN MOTOR CO., LTD., Yokohama-shi, Kanagawa 221-0023 (JP)
(72) Inventor: KAGEYAMA, Kazuhiro, Yokohama-shi Kanagawa 221-0023 (JP); SUGIMOTO, Hiromi, Yokohama-shi Kanagawa 221-0023 (JP); OKU, Takanori, Yokohama-shi Kanagawa 221-0023 (JP)
(74) Representative: Osha Liang
(86) International application number: PCT/JP2013/079958
(87) International publication number: WO 2014/080760

(56) References cited:
- EP-A1- 2 924 787
- WO-A1-2013/132860
- WO-A2-2004/025769
- JP-A- H03 257 760
- JP-A- 2009 266 735
- JP-A- 2011 034 768
- JP-A- 2011 165 589
- JP-A- 2013 178 996
- US-A1- 2002 031 697
- US-A1- 2004 161 649
- US-A1- 2007 042 250

## Description

### TECHNICAL FIELD

The present invention relates to a fuel cell stack having a structure of a stacked plurality of fuel-cell single cells.

### BACKGROUND ART

A fuel cell stack of this kind is disclosed in document US2007/042250 and in Patent Document 1 titled "fuel cell stack structure". The fuel cell stack structure disclosed in Patent Document 1 includes a plurality of multi-cell modules each of which is formed by stacking a plurality of cells, wherein the plurality of multi-cell modules are arranged in series in the stacking direction, and bead gaskets seal the interface between the plurality of multi-cell modules.

### CITATION LIST

### Patent Literature

Patent Document 1: Japanese Patent Unexamined Publication No. 2005-190706

### SUMMARY OF INVENTION

### Technical Problem

However, in such fuel cell stacks as described above, since a dissimilar member such as a bead gasket is interposed between multi-cell modules, a dimensional error or the like may cause insufficient load transfer in the stacking direction. This may cause uneven power generation performance between cells (fuel-cell single cells) or the like.

The present invention was made in view of the above-described circumstances, and an object thereof is to provide a fuel cell stack that includes two or more cell modules and a novel sealing plate interposed between the cell modules and that can adequately transfer a load in the stacking direction.

### Solution to Problem

According to a first aspect, the fuel cell stack of the present invention comprises at least two cell modules, each of which is constituted by an integrally-stacked plurality of fuel-cell single cells; and a sealing plate interposed between the cell modules. Each of the plurality of fuel-cell single cells comprises a membrane electrode assembly and a pair of corrugated separators sandwiching the membrane electrode assembly. The sealing plate comprises a sealing member that seals an interface between the sealing plate and an edge part of the at least two cell modules. The fuel cell stack further comprises a member contacting means to transfer a load in the stacking direction disposed in a sealed inner area between the at least two cell modules and the sealing plate. The member contacting means comprises a plurality of protrusions formed within the sealed inner area by corrugations of the corrugated separators located on an outer side of the outermost fuel-cell single cells of each cell module, and an opening of the sealing plate that allows the plurality of protrusions on both sides thereof to contact with each other through the opening. The apexes of the corrugations are set to a level higher than a regular level in the separators. The above-described configuration serves as means for solving a problem with the prior art.

According to a second aspect, the fuel cell stack of the present invention comprises at least two cell modules, each of which comprises an integrally-stacked plurality of fuel-cell single cells and is curved-shape in the center part thereof, and a sealing plate interposed between the at least two cell modules. Each of the plurality of fuel-cell single cells comprises a membrane electrode assembly, a pair of separators sandwiching the membrane electrode assembly, and sealing members disposed between a frame of the membrane electrode assembly and the separators at opposite edge parts thereof. The sealing plate comprises a sealing member that seals an interface between the sealing plate and an edge part of the at least two cell modules. The fuel cell stack further comprises a member contacting means to transfer a load in a stacking direction, disposed in a sealed inner area between the at least two cell modules and the sealing plate. The member contacting means comprises protrusions constituted by convex surfaces of each curved-shaped cell module and an opening of the sealing plate that allows the protrusions on both sides thereof to contact with each other through the opening.

According to embodiments of the fuel cell stack of the first or the second aspect, the fuel cell stack may further comprise a spacer disposed in the opening and in contact with the protrusions.

### Advantageous Effects of Invention

With the above-described configuration, the fuel cell stack of the present invention, which includes the two or more cell modules and the sealing plate interposed between the cell modules, can adequately transfer a load in the stacking direction. This can equalize the surface pressure and the contact resistance acting on each of the fuel-cell single cells and can also equalize the power generation performance of each of the fuel-cell single cells.

### BRIEF DESCRIPTION OF DRAWINGS

FIG. 1 are (A) a perspective view and (B) an exploded perspective view of a fuel cell stack.
FIG. 2 are (A) a plan view of a cell module and (B) a plan view of a sealing plate.
FIG. 3 is a cross sectional view of the interface between cell modules, illustrating a fuel cell stack according to an embodiment of the present invention.
FIG. 4 is a cross sectional view of the interface between cell modules, illustrating a fuel cell stack according to another embodiment of the present invention.
FIG. 5 are (A) a graph illustrating the relationship between adhesive curing temperature and deformation or contact area of a cell module and (B) an explanatory view of a cell module.
FIG. 6 are (A) (B) cross sectional views illustrating fuel cell stacks according to yet other embodiments, the embodiment of Fig. 6(B) not forming part of the invention.
FIG. 7 are (A) (B) cross sectional views illustrating fuel cell stacks according to yet other embodiments, the embodiment of Fig. 7(b) not forming part of the invention.

### EMBODIMENTS OF INVENTION

### (First Embodiment)

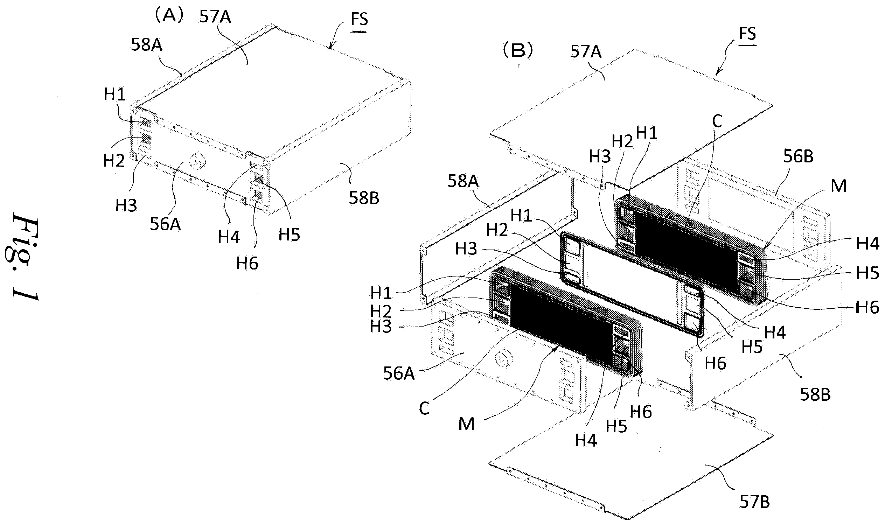

A fuel cell stack FS of FIG. 1 includes, particularly as illustrated in FIG. 1 (B), at least two cell modules M, each of which is constituted by an integrally-stacked plurality of fuel-cell single cells C, and a sealing plate P interposed between the cell modules M.

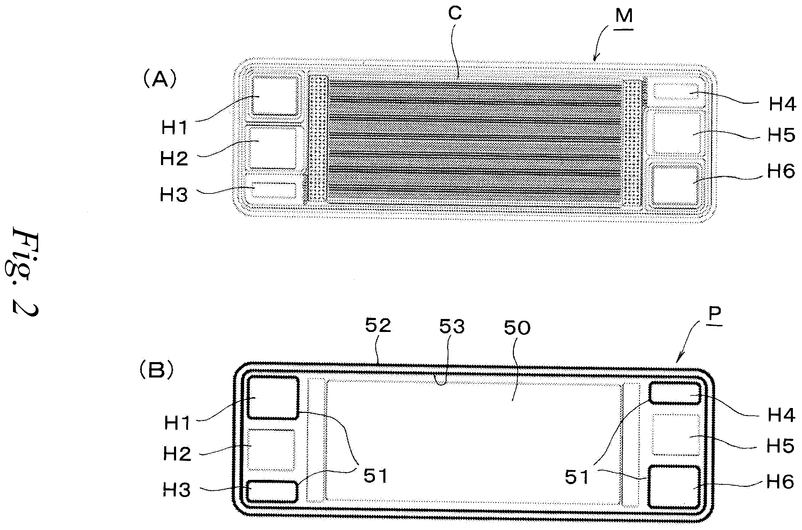

In the illustrated embodiment, the fuel-cell single cells C and the sealing plate P have a rectangular shape with substantially identical length and width, as illustrated in FIG. 2.

FIG. 1 (B) illustrates only two cell modules M and one sealing plate P, but in a practical use, more cell modules M and sealing plates P are stacked.

The fuel cell stack FS further includes end plates 56A, 56B disposed respectively in both ends of the cell modules M in the stacking direction, fastening plates 57A, 57B disposed on both surfaces corresponding to the long sides of the fuel-cell single cells C (the upper and lower surfaces in FIG. 1), and reinforcing plates 58A, 58B disposed on both surfaces corresponding to the short sides. The fastening plates 57A, 57B and the reinforcing plates 58A, 58B are coupled to both end plates 56A, 56B by bolts (not shown).

As described above, the fuel cell stack FS has a case-integrated structure as illustrated in FIG. 1 (A), in which the cell modules M and the sealing plate P are restrained and pressed in the stacking direction so that a predetermined contact pressure is applied on each of the fuel-cell single cells C. With this structure, the gas sealing and the electrical conductivity are maintained at high level.

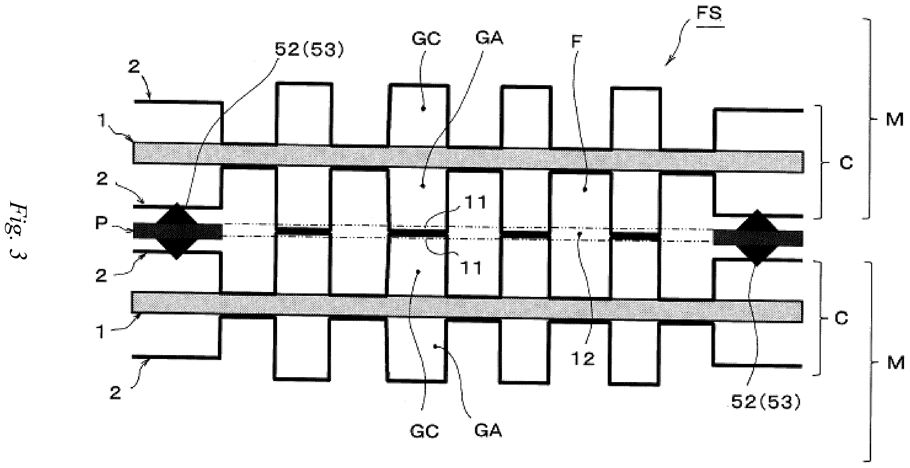

FIG. 3 is a cross sectional view of a main part of the fuel cell stack FS taken in parallel to the short sides of the fuel-cell single cells C. Each of the fuel-cell single cells C includes a membrane electrode assembly 1, a pair of separators 2, 2 sandwiching the membrane electrode assembly 1. The membrane electrode assembly 1 and the separators 2, 2 form gas channels GC, GA therebetween, respectively for cathode gas and anode gas.

The membrane electrode assembly 1, which is generally referred to as an MEA (membrane electrode assembly), includes an electrolyte layer of a solid polymer that is interposed between a cathode layer and an anode layer, although they are not shown in detail in the figure. The membrane electrode assembly 1 is integrally with an outer resin frame (not shown). A manifold hole or the like may be formed in the frame to supply or discharge reaction gas.

As illustrated in FIG. 3, the separators 2 are constituted by metal plates in which one plate has reversed faces to those of the other plate. For example, the separators 2 are made of stainless steel and may be formed in any suitable shape by press working. The separators 2 have an uneven cross-sectional shape at least in the part corresponding to the membrane electrode assembly 1. The uneven cross-sectional shape of the separators 2 continuously extends in the length direction. The apexes of the corrugation are in contact with the membrane electrode assembly 1, while the bottoms of the corrugation and the membrane electrode assembly 1 form the cathode and anode gas channels GC, GA.

As illustrated in FIG. 2 (A), each of the fuel-cell single cells C includes manifold holes H1 to H3 and H4 to H6, which are arranged such that each short side has three manifold holes. The manifold holes H1 to H6 are formed at the same location in the frame of the membrane electrode assembly 1 and the separators 2 so that they are communicated with corresponding manifold holes when the fuel-cell single cell C is assembled.

The manifold holes H1 to H3 on the left in FIG. 2 are configured respectively to supply cathode gas (HI), to discharge cooling fluid (H2) and to discharge anode gas (H3) from the top. These manifold holes are communicated with corresponding manifold holes in the stacking direction to form respective channels. The manifold holes H4 to H6 on the right in FIG. 2 are configured respectively to supply the anode gas (H4), to supply the cooling fluid (H5) and to discharge the cathode gas (H6) from the top. These manifold holes are communicated with corresponding manifold holes in the stacking direction to form respective channels. The positional relationship of the manifold holes H1 to H6 may be partly or fully reversed in respect of supply and discharge.

Although not shown in the figure, sealing members are disposed between the frame of the membrane electrode assembly 1 and the separators 2 and around the manifold holes H1 to H6. The sealing members, which also serve as an adhesive as described below, air-tightly join the membrane electrode assembly 1 with the separators 2. In this regard, the sealing members disposed in the edge part of the frame of the membrane electrode assembly 1 and the separators 2 provide air-tightness of the gas channels GC, GA. Further, the sealing members disposed around the manifold holes H1 to H6 have openings, for supplying fluids to respective interlayer gaps, at suitable locations, while providing air-tightness.

A predetermined number of above-described fuel-cell single cells C are stacked to form a cell module M. In this regard, two adjacent fuel-cell single cells C form a channel F for cooling fluid (e.g. water) therebetween, and two adjacent cell modules M also form a channel F for cooling fluid therebetween. That is, the sealing plate P is disposed between the cell modules M, i.e. in the channel F for cooling fluid.

The sealing plate P is formed as a separate piece from the above-described fuel-cell single cells C. As illustrated in FIG. 2 (B), manifold holes H1 to H6 are formed on both ends of a plate base 50 similarly with the fuel-cell single cells C.

The plate base 50 is molded from a single electrically-conductive metal plate. The plate base 50 is formed in substantially the same shape and size as the above-described fuel-cell single cells C in the plan view. Since the plate base 50 is constituted by the electrically-conductive metal plate, it can provide stable electrical connection over time.

In the sealing plate P, sealing members 51 are formed around each of the manifold holes H1 to H6. Further, an outer sealing member 52 is formed along the outermost edge of the plate base 50, and an inner sealing member 53 is formed along the inner side of the outer sealing member 52 with a predetermined distance. These sealing members are individually formed all over the periphery in an endless shape. The sealing members 51 around the manifold holes H1 to H6 are disposed independently from each other.

The sealing plate P keeps back rainwater from the outside by means of the outer sealing member 52 and prevents a leak of the cooling fluid flowing through the channel F between the cell modules M by means of the inner sealing member 53. The sealing plate P also provides electrical insulation. Further, the sealing plate P is configured to be easily detachable by peeling the sealing members 51 to 53 from the cell modules M.

As described above, the fuel cell stack FS includes the two or more cell modules M, each of which is constituted by the integrally stacked plurality of fuel-cell single cells C, and the sealing plate P interposed between the cell modules M. The sealing plate P further includes the outer and inner sealing member 53, 53 that seals the interfaces between the sealing plate P and the edge parts of the cell modules M.

That is, in the fuel cell stack FS, the sealing plate P, i.e. a dissimilar member, is interposed between the cell modules M constituted by the fuel-cell single cells C. In order to improve a load transfer in the stacking direction, the fuel cell stack FS is provided with a member contacting means to transfer a load in the stacking direction, which disposed in a sealed inner area between the cell modules M and the sealing plate P.

In the fuel cell stack FS according to the embodiment of FIG. 3, the member contacting means includes protrusions 11 formed within the sealed inner area of the cell modules M and an opening 12 formed in the sealing plate P to allow the protrusions of the cell modules M on both sides thereof to contact with each other. That is, in this embodiment, the member contacting means is composed of the protrusions 11 and the opening 12.

The above-described apexes of the corrugation of the separators 2 are used as the protrusions 11 formed on the cell modules M. Accordingly, the protrusions 11 can be formed by setting the height of the apexes of the corrugation to a level higher than a regular level at least in the separators 2 that are located on the outer side of the outermost fuel-cell single cells C of each cell module M.

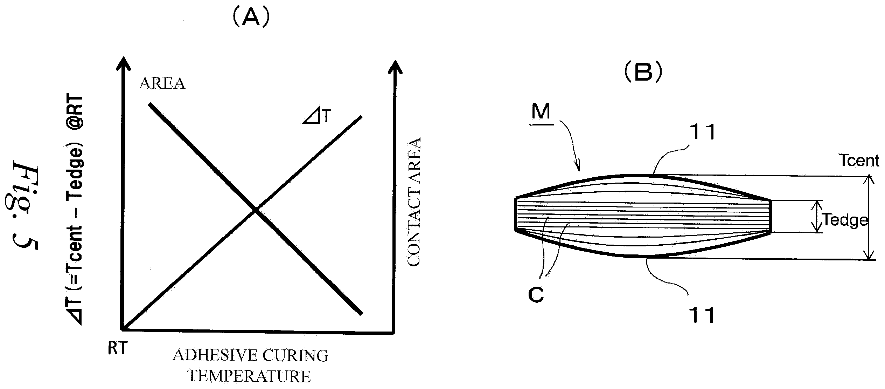

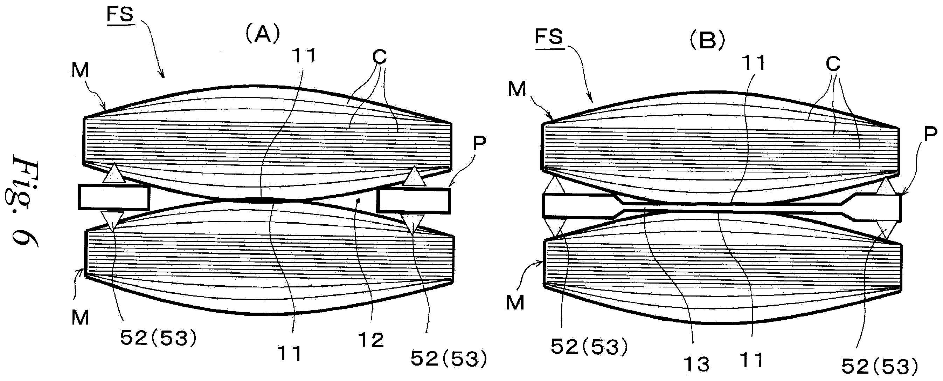

Alternatively, the protrusions 11 can be formed by setting the height of the apexes of the corrugation in a center area to a level slightly higher than the regular level in at least one of the separators 2 of each fuel-cell single cell C, and the single cells C that include such a separator 2 are stacked. When such fuel-cell single cells C are stacked, since the excess height of the corrugation apexes of each separator 2 are accumulated, the resultant cell module M has a curved shape in which the center part is swelled as illustrated in FIG. 5 and FIG. 6. The convex surfaces of the curved cell modules M thus formed may also be used as the protrusions 11. In FIG. 5 and FIG. 6, the curvature of the curved surfaces is exaggerated. The actual curvature radius is larger, and the curved surfaces almost look like flat surfaces.

The opening 12 of the sealing plate P is formed in an area inside the above-described outer and inner sealing member 52, 53. The opening 12 has such a size that can receive the protrusions 11 of the cell modules M from both sides to allow the protrusions 11 of the cell modules M on both sides to contact with each other in the opening 12. Accordingly, the height of the protrusions 11 of each cell module M is approximately a half of the thickness of the sealing plate P.

In the fuel cell stack FS that includes the two or more cell modules M and the sealing plate P interposed between the cell modules M, the protrusions 11 of adjacent two cell modules M are in contact with each other through the member contacting means, i.e. the opening 12 of the sealing plate P. This can improve a load transfer in the stacking direction even if there is a dimensional error or the like between the components.

That is, the fuel cell stack FS, in which a dissimilar member (the sealing plate P) is interposed between the cell modules M, can adequately transfer a load in the stacking direction. This can equalize the surface pressure and the contact resistance of the fuel-cell single cells C, which can eventually equalize the power generation performance of the fuel-cell single cells C.

As a result of the above-described improvement in load transfer and equalization of the surface pressure and the contact resistance, the surface pressure acting on the outer and inner sealing members 52 and 53 of the sealing plate P also becomes sufficient and uniform. Accordingly, the fuel cell stack FS can have improved sealing performance of the sealing plate P.

Further, since the fuel cell stack FS is configured such that the sealing plate P is easily detachable from the cell modules M, if there is a defect in one of the fuel-cell single cells C, it is possible to exchange only the cell module M that includes the faulty fuel-cell single cell C. Therefore, it is advantageous that the other fuel-cell single cells C and cell modules M can be further used continuously.

### (Second Embodiment)

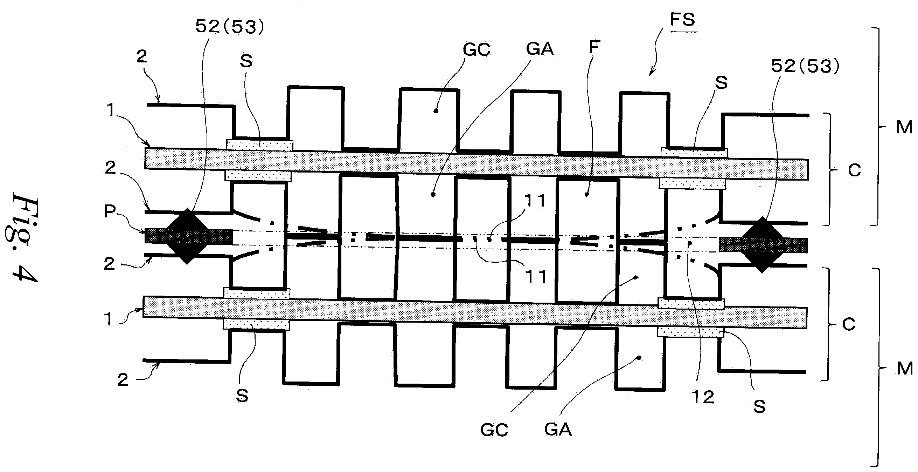

FIG. 4 illustrates a fuel cell stack according to another embodiment of the present invention. In the following embodiment, the same reference signs are denoted to the same components as those of the previous embodiment, and the detailed description thereof is omitted.

In the illustrated fuel cell stack FS, a member contacting means, that transfer a load in the stacking direction, includes protrusions 11 formed within a sealed inner area of cell modules M and an opening 12 formed in a sealing plate P to allow the protrusions 11 of the cell modules M on both sides thereof to contact with each other. Further, in this embodiment, the protrusions 11 are constituted by convex surfaces formed by the curved cell modules M as illustrated by the virtual lines in FIG. 4.

In the fuel cell stack FS according to this embodiment, each fuel-cell single cell C includes sealing members S having a sealing function and a contacting function.

The sealing members S are disposed between a frame of a membrane electrode assembly 1 and separators 2 at the edge part as described in the previous embodiment. Since heat is generated during power generation, a thermosetting adhesive is used for the sealing members S.

The frame of the membrane electrode assembly 1 is made of resin while the separators 2 are made of metal. When such dissimilar materials are joined with each other by using a thermosetting adhesive, the adhesive contracts after curing. Accordingly, the fuel-cell single cells C swells in the center part due to the contraction of the outer edge. Therefore, when a plurality of such fuel-cell single cells C are stacked to form a cell module M, the deformation of each fuel-cell single cells C are accumulated. As a result, as illustrated in FIG. 5 and FIG. 6, the cell modules M have a curved shape in which they swells in the center part. These convex surfaces of the curved cell modules M serve as the protrusions 11.

FIG. 5 (A) is a graph illustrating the relationship between adhesive curing temperature and deformation or contact area of the cell module M, and FIG. 5 (B) is an explanatory view of the cell module M. The cell modules M are in an undeformed condition at a temperature at which the adhesive cures by heat. Accordingly, as illustrated in FIG. 5 (A), the larger the temperature difference between the curing temperature and room temperature (RT), the larger the amount of thermal contraction. As a result, as illustrated in FIG. 5 (B), the edge part (T_{edge}) where the adhesive is applied contracts more to produce a difference (ΔT) between the edge part and the center part (T_{cent}). Further, as can be seen from FIG. 5 (B), the difference in thickness between the edge part and the center part is inversely proportional to the contact area. In producing the cell modules M, it is possible to form convex surface on both sides of the cell modules M or to control the amount of swelling by selecting the curing temperature of the adhesive (sealing member S) or the like.

As with the previous embodiment, in the fuel cell stack FS that includes the cell modules M and the sealing plate P interposed between the cell module M, the protrusions 11 of adjacent two cell modules M are in contact with each other through the opening 12 of the sealing plate P. This can improve a load transfer in the stacking direction even if there is a dimensional error or the like between the components.

Further, the equalized surface pressure and contact resistance of each of the fuel-cell single cells C enables equalization of the power generating function of the fuel-cell single cells C. In addition, the surface pressure acting on the outer and inner sealing members 52 and 53 of the sealing plate P also becomes sufficient and uniform. This can improve the sealing performance of the sealing plate P.

Ideally, if fuel-cell single cells C of the above-described cell modules M were flat and have uniform thickness, the surface pressure distribution would be uniform when they are stacked. However, as described above, since the resin frame of the membrane electrode assembly 1 and the metal separators 2 are joined with each other by using the thermosetting adhesive, the fuel-cell single cells C have a swelled center part.

In the present invention, the convex surfaces of the cell modules M due to the swelled fuel-cell single cells C and the sealing plate P interposed between the cell modules M are ably utilized to provide the member contacting means that is composed of the convex surfaces as the protrusions 11 and the opening 12 of the separator 2. Then, the member contacting means improves load transfer in the stacking direction and allows a sufficient and uniform surface pressure to be applied on the inner and outer sealing member 52, 53 of the sealing plate P.

### (Third Embodiment)

FIG. 6 illustrates fuel cell stacks according to another embodiment of the present invention. In the following embodiment, the same reference signs are denoted to the same components as those of the previous embodiments, and the detailed description thereof is omitted.

Each of the fuel cell stacks FS illustrated in FIG. 6 (A) and (B) includes protrusions 11 formed within a sealed inner area of cell modules M as a member contacting means to transfer a load in the stacked direction. The protrusions 11 may be constituted by either convex surfaces formed by the apexes of corrugation of separators 2 as illustrated in FIG. 3 or convex surfaces formed by swelling of fuel-cell single cells C by means of a thermosetting adhesive as illustrated in FIG. 4.

The fuel cell stack FS of FIG. 6 (A) includes, as the member contacting means, the above-described protrusions 11 and an opening 12 formed in the sealing plate P. The fuel cell stack FS of FIG. 6(B), which is not part of the present invention, includes, as the member contacting means, the above-described protrusions 11 and a thin portion 13 formed in the sealing plate P to allow the protrusions 11 of the cell modules M on both sides thereof to contact with each other.

As with the previous embodiments, the above-described fuel stacks FS can adequately transfer a load in the stacked direction even if there is a dimensional error or the like between the components. As a result, the equalized surface pressure and contact resistance of each of the fuel-cell single cells C enables equalization of the power generating performance of the fuel-cell single cells C. The sealing performance of the sealing plate P can also be improved. Furthermore, the opening 12 or the thin portion 13 formed in the sealing plate P produces advantageous effects of the reduced weight of the sealing plate P and the high yield of the sealing plate P with respect to the material thereof. They can also improve the flow of cooling fluid.

### (Fourth Embodiment)

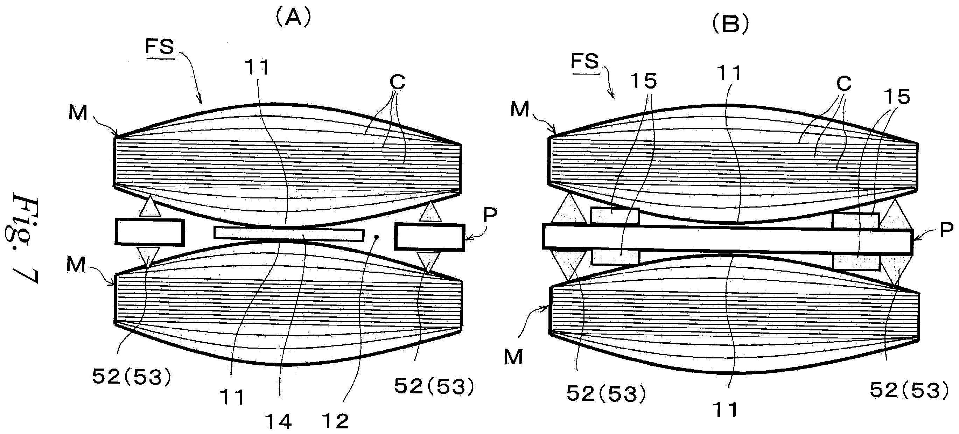

FIG. 7 illustrates fuel cell stacks according to another embodiment of the present invention. Each of the fuel cell stacks FS illustrated in FIG. 7 (A) and (B) includes, as a member contacting means to transfer a load in the stacking direction, protrusions 11 formed within a sealed inner area of cell modules M. The protrusions 11 may be either convex surfaces formed by the apexes of corrugation of separators 2 as illustrated in FIG. 3 or convex surfaces formed by swelling of fuel-cell single cells C by means of a thermosetting adhesive as illustrated in FIG. 4.

The fuel cell stack FS of FIG. 7 (A) includes, as the member contacting means, the above-described protrusions 11, an opening 12 formed in the sealing plate P and a spacer 14 disposed in the opening 12. In this embodiment, the protrusions 11 of the cell modules M on both sides are inserted in the opening 12 and are in contact with the spacer 14.

The fuel cell stack FS of FIG. 7(B), which is not part of the present invention, includes, as the member contacting means of the cell modules M, the above-described protrusions 11 and spacers 15 interposed between the cell modules M and the sealing plate P. In this embodiment, the sealing plate P does not have an opening, and the spacers 15 are disposed around the protrusions 11 of the cell modules M, i.e. in the gaps between the cell modules M and the sealing plate P formed by the protrusions 11.

The spacers 14, 15 can be formed at the same time as forming sealing members 51 to 53 in the sealing plate P. For example, the sealing members 51 to 53 and the spacers 14, 15 may be formed simultaneously with a rubber material by injection molding on the sealing plate P.

As with the previous embodiments, the above-described fuel cell stacks FS can adequately transfer a load in the stacked direction even if there is a dimensional error or the like between the components. As a result, the equalized surface pressure and contact resistance of each of the fuel-cell single cells C enables equalization of the power generating performance of the fuel-cell single cells C. The sealing performance of the sealing plate P can also be improved. Furthermore, the spacers 14, 15 increase the flexibility of adjustment for further improving load transfer. Use of an elastic material for the spacers 14, 15 produces advantageous effects of improved load transfer and capability of absorbing a deformation in the stacking direction.

Furthermore, the fuel cell stacks FS illustrated in FIG. 6 and FIG. 7 are flexible in their design by suitably selecting the protrusions 11, the opening 12, the thin portion 13 and the spacers 14, 15 illustrated in the respective embodiments and combining them, according to the amount of deformation of the cell modules M and the thickness of the sealing plate P. The number and shape of the spacers are also flexible.

The configuration of the fuel cell stack according to the present invention is not limited to the above-described embodiments. Detail of the configuration may be suitably changed, and the configurations of the above-described embodiments may be suitably combined with each other without departing from the scope of the present invention, which is defined by the appended claims.

### REFERENCE SIGNS LIST

- C: Fuel-cell single cell
- FS: Fuel cell stack
- M: Cell module
- P: Sealing plate
- 11: Protrusion (member contacting means)
- 12: Opening (member contacting means)
- 13: Thin portion (member contacting means)
- 14, 15: Spacer (member contacting means)
- 52: Outer sealing member
- 53: Inner sealing member

## Claims

1. A fuel cell stack, comprising:
at least two cell modules (M), each of which comprises an integrally-stacked plurality of fuel-cell single cells (C); and
a sealing plate (P) interposed between the at least two cell modules (M),
wherein:
each of the plurality of fuel-cell single cells (C) comprises a membrane electrode assembly (1) and a pair of corrugated separators (2) sandwiching the membrane electrode assembly (1),
the sealing plate (P) comprises a sealing member (52, 53) that seals an interface between the sealing plate (P) and an edge part of the at least two cell modules (M),
the fuel cell stack (FS) further comprises: a member contacting means to transfer a load in a stacking direction, disposed in a sealed inner area between the at least two cell modules (M) and the sealing plate (P),
the member contacting means comprises:
a plurality of protrusions (11) formed within the sealed inner area by corrugations of the corrugated separators (2) located on an outer side of the outermost fuel-cell single cells (C) of each cell module (M), and
an opening (12) of the sealing plate (P) that allows the plurality of protrusions (11) on both sides thereof to contact with each other through the opening (12), and
the apexes of the corrugations are set to a level higher than a regular level in the separators (2).

2. A fuel cell stack, comprising:
at least two cell modules (M), each of which comprises an integrally-stacked plurality of fuel-cell single cells (C) and is curved-shape in the center part thereof; and
a sealing plate (P) interposed between the at least two cell modules (M),
wherein:
each of the plurality of fuel-cell single cells (C) comprises a membrane electrode assembly (1), a pair of separators (2) sandwiching the membrane electrode assembly (1), and sealing members (S) disposed between a frame of the membrane electrode assembly (1) and the separators (2) at opposite edge parts thereof;
the sealing plate (P) comprises a sealing member (52, 53) that seals an interface between the sealing plate (P) and an edge part of the at least two cell modules (M),
the fuel cell stack (FS) further comprises: a member contacting means to transfer a load in a stacking direction, disposed in a sealed inner area between the at least two cell modules (M) and the sealing plate (P),
the member contacting means comprises:
protrusions (11) constituted by convex surfaces of each curved-shaped cell module (M), and
an opening (12) of the sealing plate (P) that allows the protrusions (11) on both sides thereof to contact with each other through the opening (12).

3. The fuel cell stack of claim 1 or claim 2, further comprising a spacer (14) disposed in the opening (12) and in contact with the protrusion (11).

## Patentansprüche

1. Brennstoffzellenstapel; umfassend
wenigstens zwei Zellmodule (m), welche jeweils eine Mehrzahl von integral gestapelter Einzelbrennstoffzellen (C) umfassen; und
eine zwischen den wenigstens zwei Zellmodulen (M) angeordnete Dichtplatte (P),
wobei:
jede der Mehrzahl von Einzelbrennstoffzellen (C) eine Membranelektrodenanordnung (1) und ein Paar geriffelter Separatoren (2) aufweist, die die Membranelektrodenanordnung (1) zwischen sich einschließen,
die Dichtplatte (P) ein Dichtelement (52, 53) aufweist, das eine Grenzfläche zwischen der Dichtplatte (P) und einem Kantenteil der wenigstens zwei Zellmodule (M) abdichtet,
wobei der Brennstoffzellenstapel (FS) des Weiteren umfasst: ein Elementkontaktmittel zur Übertragung einer Kraft in Stapelrichtung, das in einem abgedichteten Innenbereich zwischen den wenigstens zwei Zellmodulen (M) und der Dichtplatte (P) angeordnet ist,
wobei das Elementkontaktmittel umfasst:
eine Mehrzahl von in dem Innenbereich durch Riffelungen der an einer Außenseite der äußersten Einzelkraftstoffzellen (C) angeordneten geriffelten Separatoren (20) ausgebildeten Vorsprüngen (11), und
eine Öffnung (12) der Dichtplatte (P), die es der Mehrzahl von Vorsprüngen (11) erlaubt, sich durch die Öffnung (12) an beiden Seiten zu berühren, und
die Scheitelpunkte der Riffelungen auf einem höheren Niveau liegen als ein Normalniveau in den Separatoren (2).

2. Brennstoffzellenstapel, umfassend
wenigstens zwei Zellmodule (M), welche jeweils eine Mehrzahl von integral gestapelter Einzelbrennstoffzellen (C) umfassen und im Mittelteil bogenförmig ausgebildet sind; und eine zwischen den wenigstens zwei Zellmodulen (M) angeordnete Dichtplatte (P),
wobei:
jede der Mehrzahl von Einzelbrennstoffzellen (C) aufweist: eine Membranelektrodenanordnung (1), ein Paar Separatoren (2), die die Membranelektrodenanordnung (1) zwischen sich einschließen, und zwischen einem Rahmen der Membranelektrodenanordnung (1) und den Separatoren (2) an gegenüberliegenden Kantenteilen angeordnete Dichtelemente (S);
die Dichtplatte (P) ein Dichtelement (52, 53) aufweist, das eine Grenzfläche zwischen der Dichtplatte (P) und einem Kantenteil der wenigstens zwei Zellmodule (M) abdichtet;
wobei der Brennstoffzellenstapel (FS) des Weiteren umfasst: ein Elementkontaktmittel zur Übertragung einer Kraft in Stapelrichtung, das in einem abgedichteten Innenbereich zwischen den wenigstens zwei Zellmodulen (M) und der Dichtplatte (P) angeordnet ist,
wobei das Elementkontaktmittel umfasst:
Vorsprünge (11), die von konvexen Oberflächen eines jeden der bogenförmigen Zellmodule (M) gebildet sind, und
eine Öffnung (12) der Dichtplatte (P), die es der Mehrzahl von Vorsprüngen (11) erlaubt, sich durch die Öffnung (12) an beiden Seiten zu berühren.

3. Brennstoffzellenstapel gemäß Anspruch 1 oder 2, der des Weiteren einen Abstandshalter (14) umfasst, der in der Öffnung (12) angeordnet ist und mit den Vorsprüngen (11) in Kontakt steht.

## Revendications

1. Empilement de piles à combustible comprenant :
au moins deux modules de cellules (M), dont chacun comprend une pluralité de cellules simples de piles à combustible (C) intégralement empilées; et
une plaque d'étanchéité (P) intercalée entre les au moins deux modules de cellules (M),
dans lequel :
chacun de la pluralité de cellules simples de piles à combustible (C) comprend un ensemble d'électrode à membrane (1) et une paire de séparateurs ondulés (2) qui prennent en sandwich l'ensemble d'électrode à membrane (1),
la plaque d'étanchéité (P) comprend un élément d'étanchéité (52, 53) qui assure l'étanchéité d'une interface entre la plaque d'étanchéité (P) et une partie de bord des au moins deux modules de cellules (M),
l'empilement de piles à combustibles (FS) comprend en outre : un moyen de mise en contact des éléments permettant de transférer une charge dans une direction d'empilement, disposé dans une zone interne étanche entre les au moins deux modules de cellules (M) et la plaque d'étanchéité (P),
le moyen de mise en contact des éléments comprend :
une pluralité de saillies (11) formées à l'intérieur de la zone interne étanche par des ondulations des séparateurs ondulés (2) situées sur un côté extérieur des cellules simples de piles à combustible (C)les plus à l'extérieur de chaque module de cellules (M), et
une ouverture (12) de la plaque d'étanchéité (P) qui permet à la pluralité de saillies (11) des deux cotés de celle-ci d'entrer en contact les unes avec les autres à travers l'ouverture (12), et
les sommets des ondulations sont définis à un niveau supérieur à un niveau normal dans les séparateurs (2).

2. Empilement de piles à combustible comprenant :
au moins deux modules de cellules (M), dont chacun comprend une pluralité de cellules simples de piles à combustible (C) intégralement empilées et a une forme incurvée dans sa partie centrale ; et
une plaque d'étanchéité (P) intercalée entre les au moins deux modules de cellules (M),
dans lequel :
chacun de la pluralité de cellules simples de piles à combustible (C) comprend un ensemble d'électrode à membrane (1), une paire de séparateurs ondulés (2) qui prennent en sandwich l'ensemble d'électrode à membrane (1), et des éléments d'étanchéité (S) disposés entre un support d'ensemble d'électrode à membrane (1) et les séparateurs (2) sur des parties de bords opposées de ceux-ci ;
la plaque d'étanchéité (P) comprend un élément d'étanchéité (52, 53) qui assure l'étanchéité d'une interface entre la plaque d'étanchéité (P) et une partie de bord des au moins deux modules de cellules (M),
l'empilement de piles à combustibles (FS) comprend en outre : un moyen de mise en contact des éléments permettant de transférer une charge dans une direction d'empilement, disposé dans une zone interne étanche entre les au moins deux modules de cellules (M) et la plaque d'étanchéité (P),
le moyen de mise en contact des éléments comprend :
des saillies (11) constituées de surfaces convexes de chaque module de cellules (M) de forme incurvée, et
une ouverture (12) de la plaque d'étanchéité (P) qui permet aux saillies (11) des deux cotés de celle-ci d'entrer en contact les unes avec les autres à travers l'ouverture (12) .

3. Empilement de piles à combustible selon la revendication 1 ou la revendication 2, comprenant en outre un espaceur (14) disposé dans l'ouverture (12) et en contact avec la saillie (11).
